Europäisches Patentamt

European Patent Office

Office européen des brevets

(19)

(11) Publication number: **0 298 566**
**A2**

## (12) EUROPEAN PATENT APPLICATION

(21) Application number: **88201412.9**

(22) Date of filing: **05.07.88**

(51) Int. Cl.⁴: **H02K 1/00**

(30) Priority: **06.07.87 NL 8701587**
**14.07.87 NL 8701653**
**04.08.87 NL 8701834**
**04.02.88 NL 8800262**

(43) Date of publication of application:
**11.01.89 Bulletin 89/02**

(84) Designated Contracting States:
**AT BE CH DE ES FR GB GR IT LI LU NL SE**

(71) Applicant: **Zielinski, Adolf Herbert Astor**
**De Sikkel 56**
**NL-5384 HS Heesch(NL)**

(72) Inventor: **Zielinski, Adolf Herbert Astor**
**De Sikkel 56**
**NL-5384 HS Heesch(NL)**

(74) Representative: **Baarslag, Aldert D. et al**
**Nederlandsch Octrooibureau Johan de**
**Wittlaan 15 P.O. Box 29720**
**NL-2502 LS Den Haag(NL)**

(54) **Method and apparatus for converting stationary magnetic energy into mechanical energy.**

(57) A method and apparatus for the conversion of stationary magnetic energy into mechanical energy, under the application of two or more, in their relation to one another, movably positioned bodies. Said bodies consist wholly or in part of permanent magnetic or magnetizable material. With at least one of the bodies a stationary magnetic field is created, under the influence of which, on at least one other of the bodies in magnetized condition, locally a force of magnetic origin is exerted, of which the vectorial resultant makes an angle unequal to zero degrees with the normal to the polar plane at said location of said other body. As a result, said bodies mutually move in substance along each others polar planes. Said stationary magnetic field may be generated by permanent magnet means or electromagnet means, excited by a constant electric current. Preferably superconducting electromagnet means are used.

FIG. 1A

## Method and apparatus for converting stationary magnetic energy into mechanical energy

The invention relates to a method for converting stationary magnetic energy into mechanical energy, under application of two or more in their relation to one another movably positioned bodies, which bodies consist wholly or in part of permanent magnetic or magnetizable material, each body in magnetized condition having one or more polar planes.

By bringing permanent magnetic bodies or magnetized magnetizable bodies together, these bodies exert forces on eachother, which forces can lead to a motion of one or more of the bodies, e.g. rotation of a rotatably positioned body. In this way, magnetic energy is converted into mechanical energy.

In the case of the well-known applications of this principle, e.g. electromotors, the energy needed for the motion of a body is for instance drawn from the mains.

It is assumed that of the many sub-atomic particles which move in space at a very high speed in all directions, the gravitons are responsible for the gravitational force of the earth, the gravitational pull among the planets, the phenomenon mass, and for the binding energy in solid matter. Without the gravitons and their respective counterparts, the anti-gravitons, matter would fall apart for lack of cohesion.

As a result of their extremely small dimensions and very high speed, gravitons are capable of passing through the earth, during which these gravitons collide on a very small scale with other particles of matter. Only a small part of the gravitons, approximately 5 %, will collide with other particles on their way through earth, and be converted into photons under release of energy. The photons thus created are consequently released by the earth in the form of warmth and magnetism. In the same way photons are released in magnetic material by the gravitons. For, as a result of irregularities in the atomic grid of the metalcrystals the binding energy caused by the photons is affected, as a result of which photons are released.

Through the process of permanent magnetization electron spins in the material can be fixed in such a way that the released photons flow through the material in a pre-determined direction, the so-called magnetization direction, which is observed as a stationary magnetic field on the outside of the material. Consequently, stationary magnetism is a current of photons and represents an amount of kinetic energy, which in the present invention is applied for bringing into motion of one or more bodies. It will be evident that also the magnetic field generated around a conductor by an electric current (current of electrons) is a kinetic energy current of photons.

The invention intends to provide a method for converting magnetic energy into mechanical energy under application of abovementioned phenomena, which method can particularly be applied for the conversion of stationary magnetic energy into mechanical energy. In this respect, stationary magnetic energy is also meant to be the magnetic energy generated by a permanent magnet or an electromagnet powered by an electric current constant in force and direction.(cf. Lehrbuch der Experimentalphysik, Prof.Dr. Karl Duesing, ed. Dr. Max Jaeneke, Leipzig 1943, p. 15, lines 9-6 from the bottom).

According to the invention the object proposed is reached in that, with at least one of the bodies a stationary magnetic field is created, under the influence of which, with respect to at least one other of the bodies in magnetized condition, locally a force of magnetic origin is exerted, of which the vectorial resultant makes an angle unequal to zero degrees with the perpendicular on the polar plane at said location of this other body beforementioned, as a result of which the said bodies mutually move in substance along each others polar planes.

By creating, according to the invention, such a resulting magnetic energy current, of which the vectorial representation makes an angle unqual to zero degrees with the perpendicular on the polar plane of a movable body, it is accomplished that in the case of two mutually affecting magnetized bodies, these bodies relatively can move in their relation to one another along their respective polar planes. It is known that commonly stationary magnetized bodies move in or out of the direction of their respective polar planes, until they meet or until they reach such a distance that an equilibrium of force is reached between e.g. frictional force and magnetic force. The method according to the invention provides consequently a conversion of magnetic energy into mechanical energy, which enables a continuous mechanical use of stationary magnetic energy.

Recent developments in the field of magnetic ceramic materials, such as Neodymium, Boron and Iron (Nd-B-Fe), have provided the technical possibility to make the magnetic energy flow under each determined angle, resp. in each desired direction (cf. Philips Data Handbook, Permanent Magnet Materials, Book C16, 1986, pp 35 ff). Also these magnetic ceramic materials can constructively be applied in such a way that, placed in a specific position, e.g. opposite a magnetic pole, they will be magnetized and that in a different position they will be non-magnetized, which enables a mechanical commutation of the magnetic energy.

The invention also relates to an apparatus for the conversion of stationary magnetic energy into mechanical energy, comprising two or more in their relation to one another movably positioned bodies, which bodies consist wholly or in part of permanent magnetic or magnetizable material, characterized in that the bodies are positioned in respect of eachother in such a way that, in magnetized condition, each body borders with a polar plane on a polar plane of another body, in which at least one of the bodies provides a stationary magnetic field, while at least one of the other bodies is constructed in such a way, that the vectors that represent a force of magnetic origin exerted by the bodies onto each other make an angle unequal to zero degrees with the perpendicular on the corresponding polar plane, as a result of which the said bodies mutually move in substance along each others polar planes.

A further advantageous embodiment of the apparatus according to the invention which is particularly suitable for applications in which relatively little mechanical energy is required, is characterized in that at least one body consists wholly or in part of a permanent magnet.

Another further embodiment of the apparatus according to the invention is characterized in that at least one body consists wholly or in part of magnetizable material, with at least one electric coil for the magnetization of said at least one body.

This embodiment, especially the variant, in which at least one electric coil is made of superconducting material, has the advantage of creating strong magnetic fields and consequently great mechanical forces at low cost of energy. As, according to the invention, magnetic energy is drawn from the environment, an electric current which flows through a closed superconducting circuit, will remain flowing for a considerable length of time without further supply of electric energy.

Undermentioned the invention will be explained on the basis of further convenient embodiments, with which magnetic energy can be converted into mechanical energy, either in a linear, or a rotating, or in another movement, reference being made to the drawings in which:

Figure 1A is a diagrammatic reproduction of the two most important parts of a linear embodiment of the apparatus according to the invention;

Figure 1B is a vector diagram which shows the mutually exerted forces of parts of the apparatus according to Figure 1A;

Figure 2A and 2B are side view and diagrammatic view of the most important parts of another embodiment of the apparatus according to the invention;

Figure 3 is a diagrammatic view of another embodiment of the apparatus according to the invention;

Figure 4 is a section along the line IV-IV through the aparatus of Figure 3 according to the invention;

Figure 5 is a section along the line V-V;

Figure 6 is a diagrammatic reproduction of another variant of the apparatus according to the invention;

Figure 7 is a section along the line VII-VII through the apparatus according to Figure 6;

Figures 8A-10A are a diagrammatic representation of further variants of the apparatus according to the invention, in which disk-shaped bodies are rotatably positioned around an axle in the centre, in a concentric manner;

Figures 8B-10B are vector diagrams which represent the forces which the parts of the respective embodiments according to Figures 8A-10A exert on each other;(forces exerted on moving part)

Figure 11A is another embodiment of the invention, in which use is made of a body with polar shoes;

Figure 11B is a vector diagram which represents the forces which parts of the embodiment according to Figure 11A exert on each other;(forces exerted on moving part)

Figures 12A-E outline partly in front-view, section and bottom-view the most important parts of a linear embodiment of the apparatus according to the invention;

Figures 13A-C represent partly in section, side-view and bottom-view another embodiment of the apparatus according to the invention, in which electromagnets are applied;

Figures 14-18 outline respectively sections of further embodiments of the apparatus according to the invention;

Figures 19A-B represent sections of a uni-directional magnet-commutator-turbine constructed according to the invention;

Figures 20A-B represent sections of a bi-directional magnet-commutator-turbine according to the invention;

Figures 21A-B represents sections of an embodiment according to the invention of a collectorless direct current motor with a rotor, which contains a cylindrical, permanent magnet with radial magnetization direction;

Figures 22A-B are a section of an embodiment according to the invention of a collectorless direct current motor with a rotor which contains an annular, permanent magnet with an axial magnetization direction.

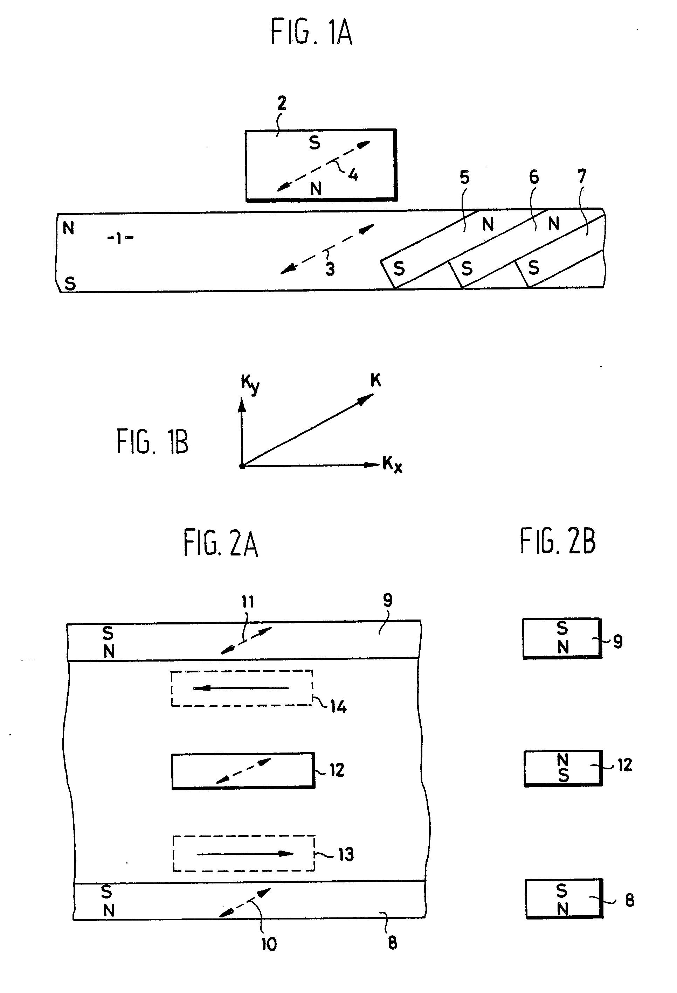

Figure 1A outlines two essential parts in an embodiment of the apparatus according to the invention. The first part is an oblong permanent magnetic body 1. The second part is a smaller, likewise permanent magnetic body 2. The permanent magnet 1 has been conveniently permanently positioned. The magnet body 2 has been positioned in such a way that it can be moved in the direction of the body 1 and moreover can move in a direction along the body 1. Those skilled in the art can think of several constructi ons enabling this movement.

The bodies 1 and 2 are magnetized in such a way that similar poles are facing each other. In the figure and likewise in the other figures N indicates the north pole or north pole side of a magnetic body, S being the south pole or south pole side. The magnetization direction of the body 1 has been indicated by the broken double arrow 3 and the magnetization direction of the body 2 has been indicated by the broken double arrow 4. The direction of magnetization is such that it is not, as commonly with permanent magnets, in the direction of the normal to the polar planes, but, on the contrary is caused to make an angle with the normal to the pole greater than zero degrees, yet smaller than 90 degrees. As it were, the body 1 can be thought to be composed of several pieces of permanent magnets 5,6 and 7 positioned in a slanting fashion next to eachother, as shown in figure 1A.

As the direction of magnetization deviates from the normal, the forces which the bodies 1 and 2 mutually exert on each other likewise are not directed according to the normal. In figure 1B the vector diagram concerned is shown. The net force which the bodies 1 and 2 exert onto each other is indicated by vector K. This vector can be decomposed into the vectors Kx and Ky. The vector Ky is the repelling perpendicular force which the body 2 experiences. In the case of a suitable distance between the two bodies the vector Ky will be equal in numerical value to the opposed gravitational force vector of the body 2, and shall therefore be compensated. At this distance between the bodies only Kx results which will lead to a motion in the x-direction, consequently in the direction along the body 1.

Figure 2 represents some essential parts of another embodiment of the apparatus according to the invention. Figure 2A outlines a side view and figure 2B outlines a section. In the case of the embodiment shown two oblong permanent magnetic bodies 8 and 9 are permanently positioned on equal distance of, and parallel to eachother. The bodies 8 and 9 are like the body 1 of figure 1A. The magnetization of the bodies 8 and 9 is such that the direction of magnetization is at an angle between zero and 90 degrees with the normal to the polar planes of the bodies 8 and 9, as indicated by the broken double arrows 10 and 11. The bodies 8 and 9 are facing each other with opposite poles.

Between the bodies 8 and 9 a smaller, likewise permanent magnetic body 12 is positioned in such a way that equal poles of body 12 and of respectively bodies 8 and 9 are facing each other. The direction of magnetization of the body 12 is preferably approximately equal to that of the bodies 8 and 9 ( which mutually have a more or less similar direction of magnetization by preference). It should be noted that the body 12 need not necessarily be permanent magnetic.

The body 12 is positioned between the bodies 8 and 9 in such a way that it can be moved in a vertical direction, and furthermore in a horizontal direction along the bodies 8 and 9. Someone skilled in the art will be able to think of a suitable construction in which like movements can be realized. When the body 12 is moved in the direction of the body 8, it will experience, in the manner described with figure 1, eventually a resulting force in the x-direction, so that body 12 will start moving to the right (in the figure) along the body 8. In figure 2A this is indicated by the position of body 12 here indicated by the broken lines 13, with an enclosed arrow pointing to the right. When the body 12 is moved in the direction of the body 9 this will eventually result in a motion (in the figure) to the left, as indicated by 14.

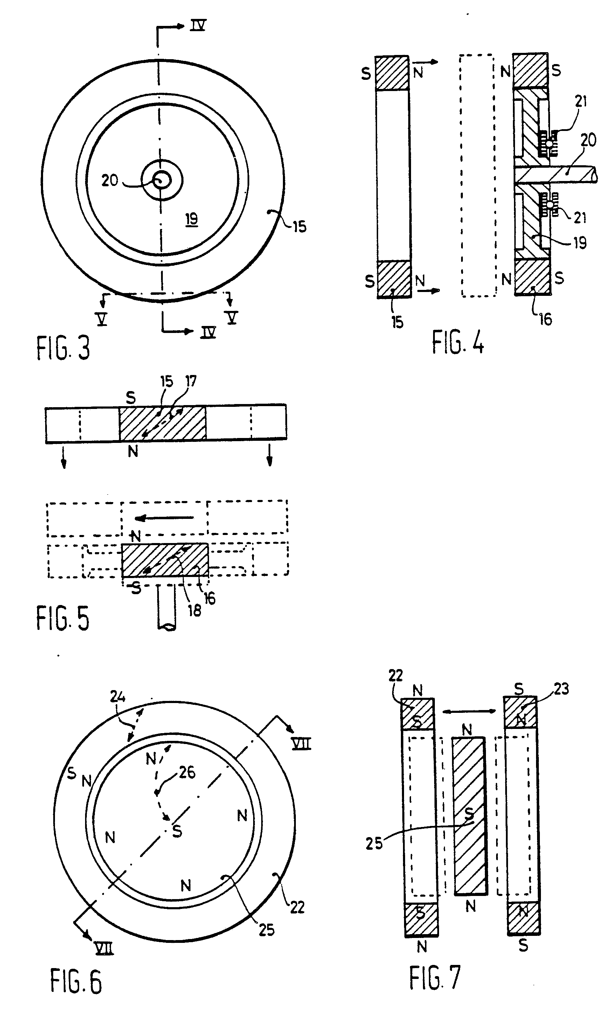

In the figures 3,4 and 5 another embodiment of the apparatus according to the invention is shown. This embodiment comprises two rings 15 and 16 of permanent magnetic material. The rings 15 and 16 are thus magnetized, as indicated by the broken double arrows 17 and 18 in figure 5, that the polar planes are positioned at the sides of the radial planes of the rings, but that the direction of magnetization is at an angle with the normal to the radial planes. Furthermore equal poles of co-axially positioned rings 15 and 16 are facing each other.

The ring 16 is connected through disk 19 to axle 20, and rotates by means of bearings 21. The ring 15 can be moved in the direction of ring 16. An expert will think of a suitable construction. When the ring 15 is moved in the direction of ring 16, as indicated by the broken lines in figure 4 and 5, a transversal force on the ring 16 will be exerted by the ring 15, because the direction of magnetization is not perpendicular on the polar planes of the magnetic rings, which will result in a rotation of the ring 16.

In figures 6 and 7 furthermore another embodiment of the apparatus according to the invention is outlined. This embodiment comprises two permanently positioned co-axial rings of permanent magnetic material at an equal distance from each other. These rings 22 and 23 are magnetized in such a way that the polar planes are respectively on the inner circumference and outer circumference of the rings. The direction of magnetization, for ring 22 in figure outlined by the broken double arrow 24, however, is such that this direction of magnetization is at an angle between zero and 90 degrees with the normal to the polar planes. The rings 22 and 23 are furthermore magnetized with opposite polarity.

Between the rings a permanent magnetic disk 25 is positioned co-axially and movable in the direction of the axle. An expert will think of a suitable construction. The disk 25 is magnetized in such a way that the north pole is at the circumference and the south pole is in the centre, in which place, if necessary, an opening for an axle is present. The direction of magnetization is as indicated by 26 and is at an angle with the normal at any point of the circumference. The diameter of disk 25 is smaller than the inside diameter of the rings 22 and 23. When the disk is positioned inside one of the rings, as outlined by the broken lines in figure 7, it will start rotating. The direction of rotation is in this opposite for the two rings 22 and 23.

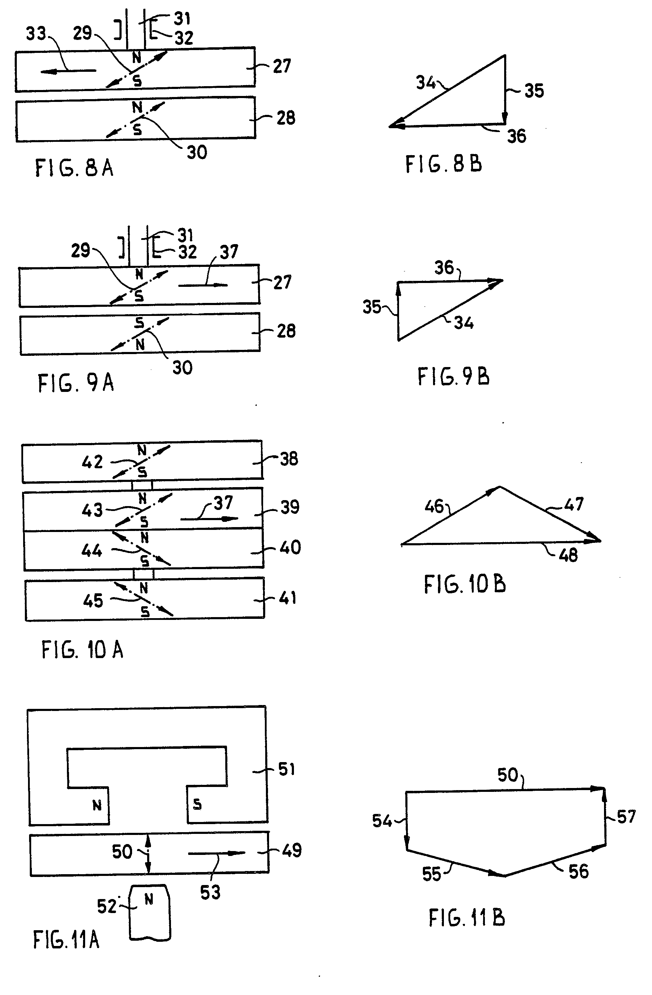

Figure 8A is a schematic representation of two essential parts in a further variant of the apparatus according to the invention. This embodiment comprises two round disks 27 and 28 of permanent magnetic, or magnetizable material. The round disks 27 and 28 are magnetized in such a way, as indicated by the double broken arrows 29 and 30, that the polar planes are on the side of the radial planes of the disks, yet that the direction of magnetization is at an angle with the normal to the radial planes, in the direction of the movement. Furthermore the unequal poles of the parallel, co-axially positioned disks 27 and 28 are facing each other.

The disk 27 is connected to an axle 31, which rotates by means of bearing 32. The disk 28 is fixed. As the direction of magnetization is not perpendicular on the polar planes of the magnetic disks, but is at an angle between zero and ninety degrees with the normal to the polar planes, a transversal force will be exerted on the disk 27 by the disk 28, which will result in a rotation of the disk 27 in the direction of the arrow 33.

In figure 8B the exerted force of disk 28 onto disk 27 is indicated by vector 34, which can be decomposed into the axial force 35, which is neutralized by the bearing 32, and the force 36, which force will cause a rotation of the disk 27.

The embodiment shown in figure 9A is identical to figure 8A, on the understanding that in the latter equal poles of the coaxially positioned disks 27 and 28 are facing each other, causing a repelling force of disk 28 to disk 27 in the direction of arrow 34, as likewise indicated in the vector diagram in figure 9B.

Figure 10A is a schematic representation of four essential parts of again another variant of the apparatus according to the invention. This embodiment comprises four round disks 38, 39, 40 and 41 made of permanent magnetic or magnetizable material. The round disks 38, 39, 40 and 41 are magnetized in such a way, as indicated by the broken double arrows, 42, 43, 44 and 45, that the polar planes are on the sides of the radial planes of the disks, yet that the direction of magnetization as at an angle with the normal to the polar planes. Furthermore the unequal poles of the co-axially, parallel positioned disks 38, 39, 40 and 41 are facing eachother.

The disks 39 and 40 are connected to an axle, which enables them to rotate (not shown). The disks 38 and 41 are fixed. As the direction of magnetization is not perpendicular to the polar planes of the magnetic disks, a tranversal force will be exerted onto the disks 39 and 40 by the disks 38 and 41, which will result in a rotation of the disks 39 and 40 in the direction of the arrow 37.

In figure 10B the exerted force of the disk 38 onto the disk 39 is represented by vector 46, whereas the force exerted by disk 41 onto disk 40 is indicated by vector 47. The total resulting force which causes the rotating movement has been indicated by vector 48.

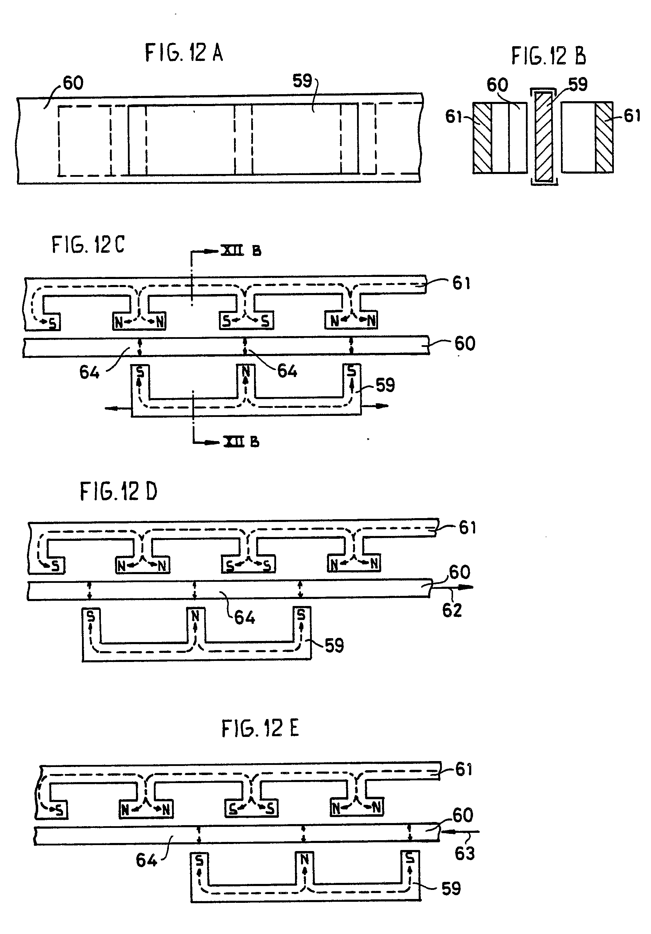

Figure 11A is a very schematic representation of three essential parts in another embodiment of an apparatus according to the invention. This embodiment comprises a round disk 49 made of magnetizable material with an axial direction of magnetization, as indicated by the broken double arrow 50, so that the polar planes are on the side of the radial planes of the disk. The disk 49 is connected to an axle in the centre by means of a bearing, and can therefore rotate (not shown).

The disk 49 is positioned between three magnetic poles of the magnets 51 and 52, which are fixed. As the direction of magnetization of the disks 49 is perpendicular on the radial planes of the disk, on the side of the disk by magnet 51 a north pole will originate, caused by the magnet 52. The disk will experience a repelling force from the north pole of the magnet 51, and a force of attraction caused by the south pole, likewise of magnet 51, as a result of which a rotating movement of the disk 49 is caused in the direction of the arrow 53.

Figure 11B shows the vectorial force diagram of disk 49, in which vector 54 represents the force exerted by magnet 52, whereas the repelling force exerted by the north pole of the magnet 51 is indicated by vector 55. The power of attraction of the south pole of the magnet 51 is indicated by the vector 56, whereas the force exerted by the axle on the disk 49 is indicated by vector 57. The resulting total force, which will cause the rotating movement, is indicated by vector 58.

Figures 12A-E show a composite variant of a linear embodiment of an apparatus according to the invention, which in principle is described and indicated in figure 11A above, however, with opposite magnets 59 and 60 with several, consecutive polar shoes, in longitudinal direction, with opposed direction of magnetization. Between the polar shoes is a, in longitudinal direction positioned runner in the shape of a band. Figure 12A shows bottom view of the magnet 59 and figure 12B is a section along the line XII-BXII-B in front view of the apparatus according to figure 12 C. The magnet 59 can be moved with regard to the magnet 61 in longitudinal direction. The runner 60 has a predetermined direction of magnetization which is diagonal to its direction of motion, as indicated by the broken double arrows 64.

When the magnet 59 is placed in the position as indicated in figure 12C, the magnet 61 does not exert any forces on the runner 60 in the direction in which the latter can move. Is the magnet 61 moved to the left, figure 12b, then the magnet 61 will exert forces on the runner 60 in its direction of motion, and the runner will move to the right, as indicated by arrow 62 in figure 12D. Is the magnet 59, as shown in figure 12E, moved to the right, then the runner will move to the left, as indicated by arrow 63.

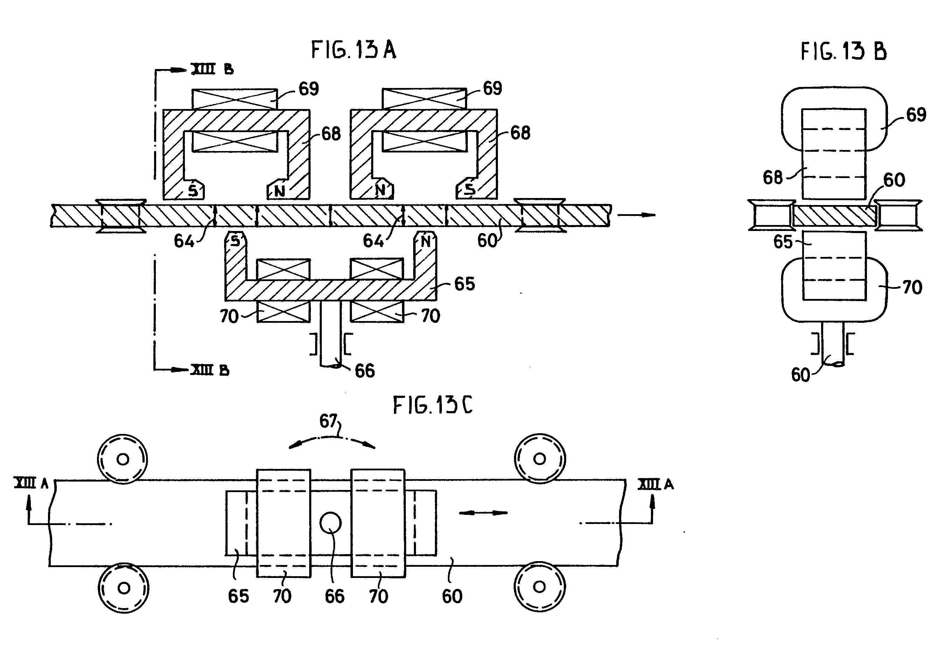

Figures 13A-C are again another variant of construction of the embodiment according to figures 12A-E, on the understanding that electromagnets 65, 68 with magnet coils 69, 70 are used, instead of permanent magnets. The magnet 65 with the axle 66 can be adjusted over an angle of 90 degrees, resp. 180 degrees, as indicated by the arrow 67. In the position as indicated in the diagram the runner 60 will move to the right. Is the magnet 65 adjusted over an angle of 90 degrees, then the runner 60 will come to a standstill. Is the magnet 65 adjusted over an angle of 180 degrees, compared to the position as indicated in figure 13 A, then the runner will move to the left.

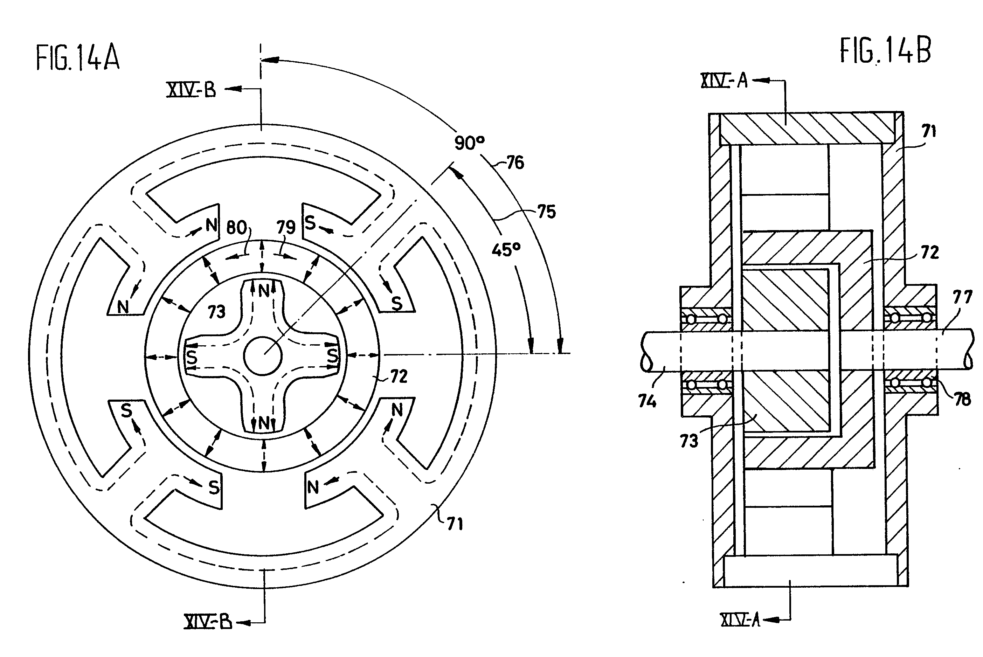

Figures 14A-B are sections of a variant of a rotating embodiment of an apparatus according to the principle of the invention. The three essential parts are the stator 71, with polar shoes, consisting of permanent magnetic material with a direction of magnetization as indicated by the broken double arrows, the rotor 72, consisting of a round drum-shaped body of magnetizable, yet not-magnetized material with radial direction of magnetization, likewise indicated by the broken double arrows, and the central permanent magnet 73, likewise provided with polar shoes. The central permanent magnet 73 can be adjusted by the axle 74 over an angle of 45 degrees, resp. ninety degrees, as indicated by the arrows 75 and 76. The rotor 72 is connected to an axle 77, which can rotate because of bearing 78.

In the position of the central magnet 73, as indicated in figure 14A, the drum 72 will make a rotating movement in the direction indicated by arrow 79. Is the central magnet adjusted over an angle of 45 degrees, the rotor 72 will come to a standstill. Is, however, the central magnet 73 adjusted over an angle of 90 degrees, then the rotor will start rotating in opposite direction, as indicated by arrow 80. Through adjustment of the central magnet 73 both direction of rotation and the number of revolutions of the rotor 72 can be controlled.

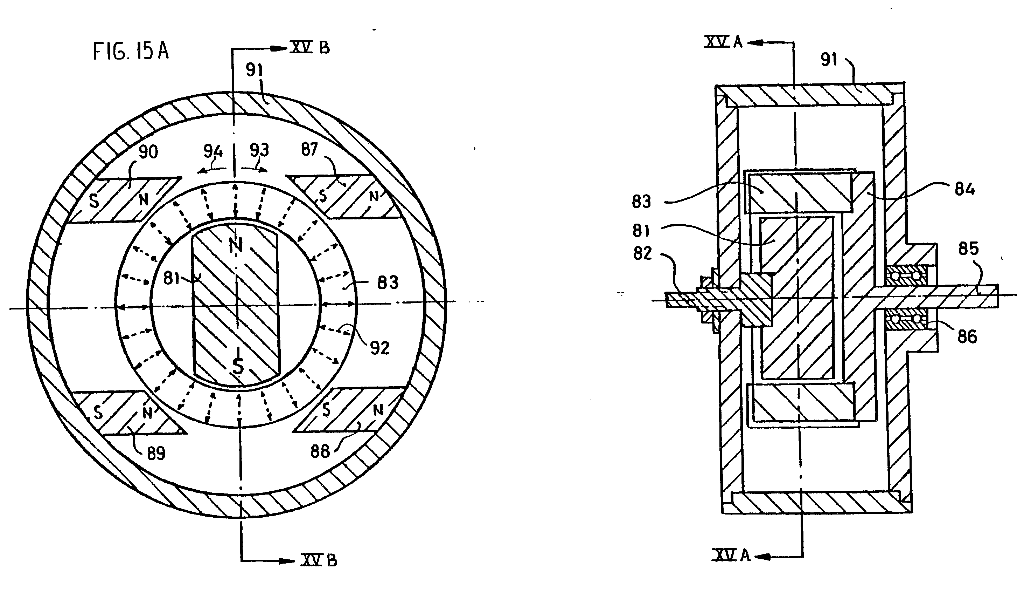

Figures 15A-B are sections of another bi-directional version of a magnet commutator motor according to the invention. The central permanent magnet 821 is mounted on an axle 82, which is provided in an adjustable manner within the rotor-commutator 83. The rotor commutator 83 consists of an annular body, preferably formed out of non-magnetized magnetic material having a radial magnetization direction, such as is indicated with the double pointed interrupted arrows 92, and which is supported by a round holder 84 consisting of a non-magnetic material, for example stainless steel. The holder 84 is coupled with an axle 85, which is rotatably mounted by means of ball bearing 86. Both the axle 82 of the central magnet 81 and the axle 85 of the rotor-commutator 83 are concentrically mounted within a system of four permanent magnets 87, 88, 89 and 90, which are fastened within the housing 91 with the magnetic polarities as shown in Fig. 15A. Because the housing 91 functions as a magnetic yoke, this housing should consists of magnetic material, for example steel casting.

The magnetic flux flow of the main field on the one side flows from the N-pole of the magnet 90 across the permanent magnet 87, via the housing 91 back to the S-pole of the permanent magnet 90. On the other side the magnetic flux flow flows from the N-pole of the permanent magnet 89 across the permanent magnet 88, via the housing 91 back to the permanent magnet 89. The central magnet 81 produces via the rotor-commutator 83 a transverse field on the above mentioned main fields. Thereby repelling tangential forces come about on the commutator, which on the one side are caused by the permanent magnets 90 and 88, and attracting tangential forces, which on the other side are caused by the permanent magnets 87 and 89. Thereby a rotation moment comes about on the rotor-commutator 83 which will start to rotate in the direction of the arrow 93. By adjusting the central magnet 81 over an angle of 90 degrees, the rotor can be brought to a stop. By adjusting the central magnet 81 over an angle of 180 degrees, the rotation direction of the rotor-commutator can be inverted as is indicated with the arrow 94. By adjusting the central magnet 81 one can regulate both the speed of revolutions and the rotation direction of the rotor 83.

Figs 16A-C represent in bottom-view, side-view and bottom-view respectively a version of an application acccording to the invention, which in particular for high-power use in which the costs for energy-generation play an important role, can be applied. The principle of the operation has already been explained on the basis of Fig. 11A-B, provided that the magnets in this version according to the invention, as represented in Fig. 16A-C, comprise both electrical coils 95, 96 and magnet heads 97 of permanent magnetic material casu quo magnetizable or magnetic material having a magnetization direction such as is indicated with the double pointed interrupted arrows.

The rotor consists of a round disk-like body 98 of magnetizable, but non-magnetized material having an axial preference magnetization direction such as is indicated with the double pointed interrupted arrows. The magnetic field in the rotor disk 98 has to be adjusted such that it becomes non-permanent magnetic such that mechanical commutation of the magnetic energy can take place through the movement of the rotor 98. The electrical coils 95, 96 can be manufactured both from super conducting wire and from normal copper wire. When one selects coils of copper wire, then the electrical magnetization starting pulse has to be such that the pole heads 97 deeply come into their magnetic saturation such that they become strongly permanent magnetic. In order to bring the apparatus to a standstill one has to supply an electrical demagnetization stop pulse such that the pole heads 97 become demagnetized. When one selects the electrical coils 95, 96 of superconducting wire, then one can omit pole heads of permanent magnetic material and the magnetic cores 99 can wholly consist of soft iron or an other suitable material.

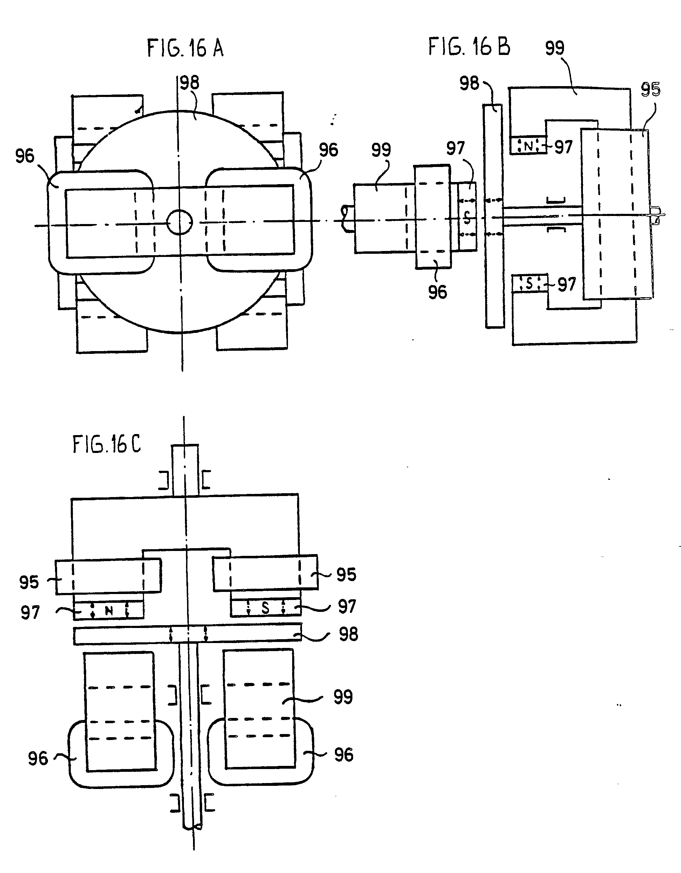

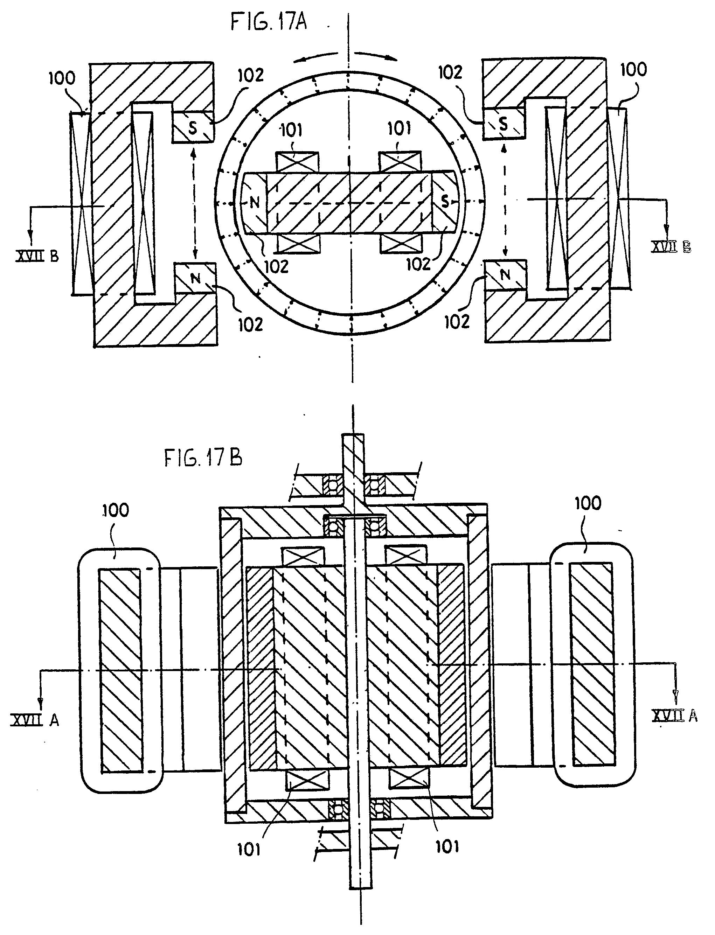

A further constructive version of an application according to the invention, which preferably can also be applied for high power, is shown in Figs 17A and 17B. The operation corresponds with·that of the apparatus according to Fig. 15A-B provided that the magnets in this embodiment according to the invention, such as shown in Fig. 17A and 17B, are provided with electrical coils 100, 101 and pole heads 102, such as described above and shown in Figs 16A and 16B. Also for this embodiment according to Figs 17A and 17B goes what has been stated in relation with the use of coils manufactured of superconducting wire casu quo of copper wire.

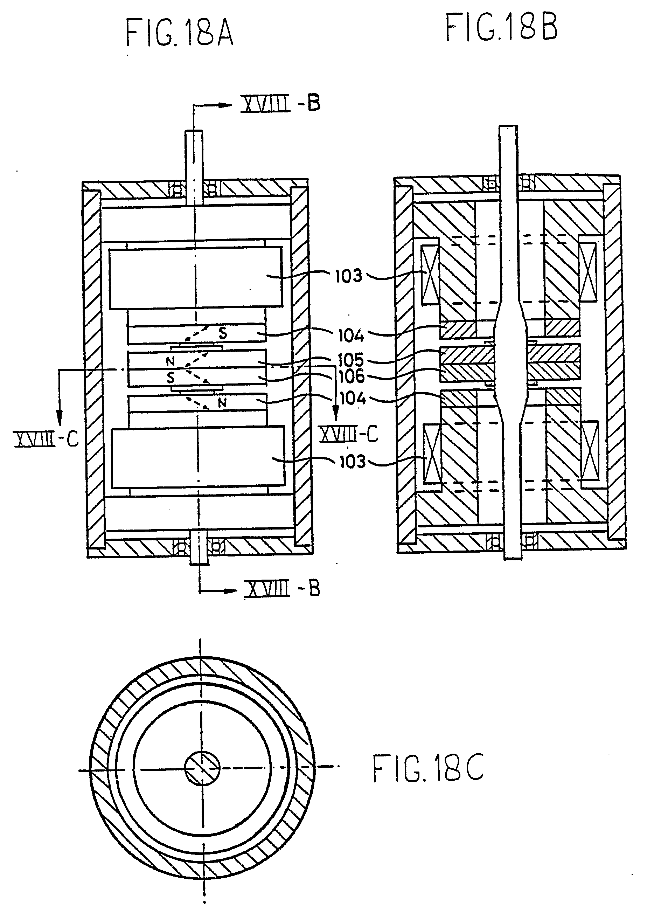

Figs 18A-C show the plan view and sections of a version of an application according to the invention, which is already schematically represented in Figs 10A and 10B, except in that the device according to Fig. 18A-C is provided with electrical coils 103 and magnet heads 104, made of permanent magnetic or magnetizable material with specific directions of magnetization, as indicated by the broken double arrows. Especially with high powers, for which the costs of energy generation plays an important role, this device is pre-eminently applicable.

Again, the electrical coils 103 may be made of super conducting wire or of copper wire. By permanent magnetization of the magnetic disks 105 and 106 of the turbine rotor, a bidirectional turbine is provided, in which the strength and direction of the electrical current are contributor to the speed regulation and direction of rotation of the turbine. By choosing specific directions of magnetization and field strengths inside the magnetic heads 104 and non-permanent magnetic parts of the device, different regulations are possible. For instance, by providing the magnetic flux with a helical or threaded like fluctuation.

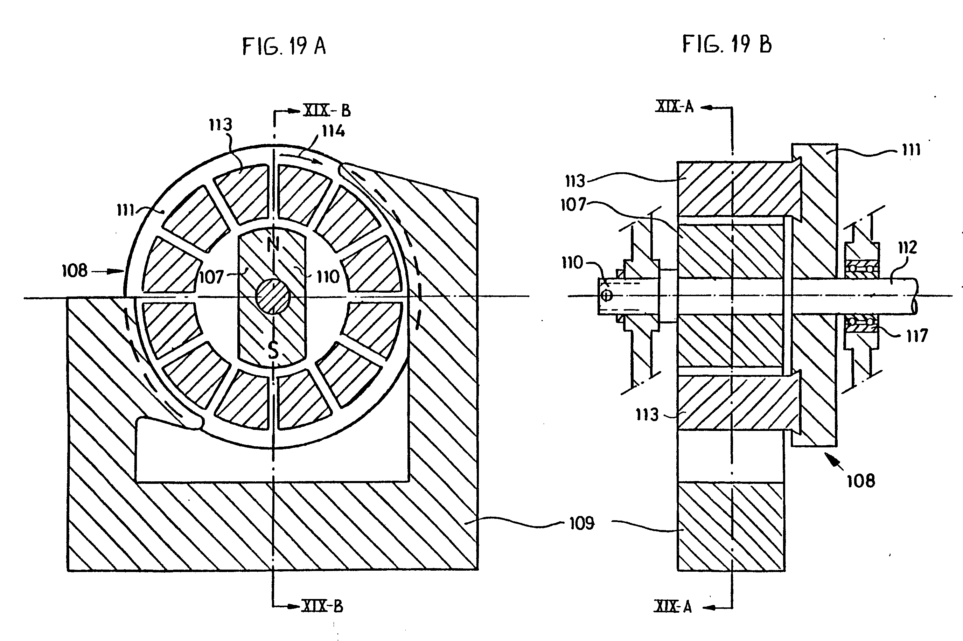

Figs 19A and 19B show a further embodiment of the device according to the invention, which is in essence comprised of three parts, a permanent magnet 107 as an energy source, a rotor-commutator 108 and a yoke 109 with pole pieces.

The permanent magnet 108 is mounted at an axle 110, which is adjustably arranged inside the rotor-commutator 108. The rotor-commutator 108 comprises plates 11, preferably made of ferrite or laminated soft iron, mounted in a round holder 111 comprised of non-magnetic material. The holder 111 is connected with an axle 112 which is rotatably mounted by means of ball bearing 117. The plates 113 are mutually magnetically separated by air or an other material with a high magnetic resistance. The axle 110 of the permanent magnet 107 and the shaft 112 of the rotor-commutator 108 are mutually concentrically mounted inside the semi-polar shoe shaped ends of yoke 109. Yoke 109 is comprised of soft iron, or an other suitable material with a low magnetic resistance.

The magnetic flux flows outward of the N-pole of the permanent magnet 107, via the plates 113 facing said N-pole, via the yoke to the plates 113 facing the S-pole, back to the S-pole of the permanent magnet 107. The plates opposite the N- and S-pole of the permanent magnet 107 experience a tangential force in the direction of the semi-polar shoe shaped ends of the yoke 109. This results in a torque on the rotor-commutator 108, which will rotate in the direction of the arrow 114. By adjusting the permanent magnet 107 over an angle of 90 degrees, the rotating rotor-commutator can be stopped. The device described above may rotate in just one direction.

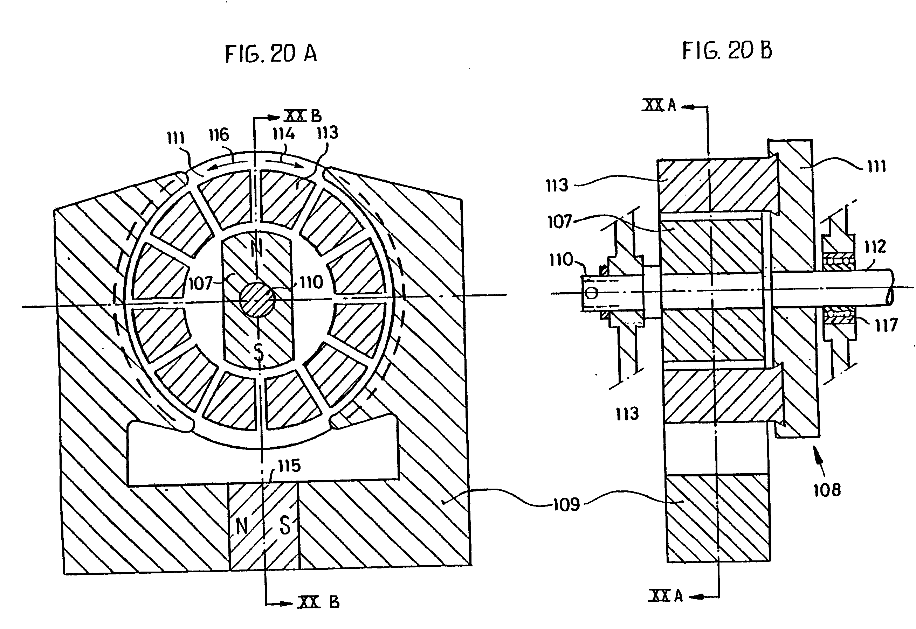

The embodiment of the device according to the invention, as shown in the Figs 20A and 20B is in essence comparable to what has been described above, except in that in yoke 109 now a second permanent magnet 115 is embodied, and that the ends of the yoke 109 are complete polar shoes.

The route of the magnetic flux is likewise as described above. However, because of the presence of the second permanent magnet 115 in the yoke 109, at the same time a repelling tangential force on the sections 113, which are positioned opposite the north and south pole of the permanent magnet 107, arises.

Through adjustment of the permanent magnet 107 over an angle of 180 degrees, the direction of rotation of the rotor-commutator can be reversed, as indicated by the arrow 116. Through adjustment of the permanent magnet 107, both direction of rotation, and number of revolutions, can be controlled.

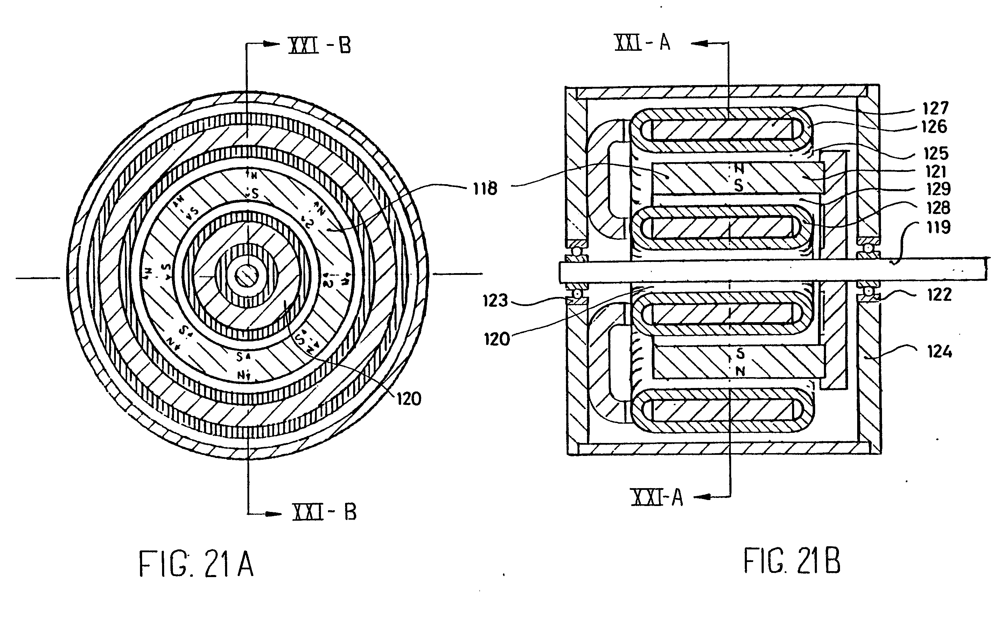

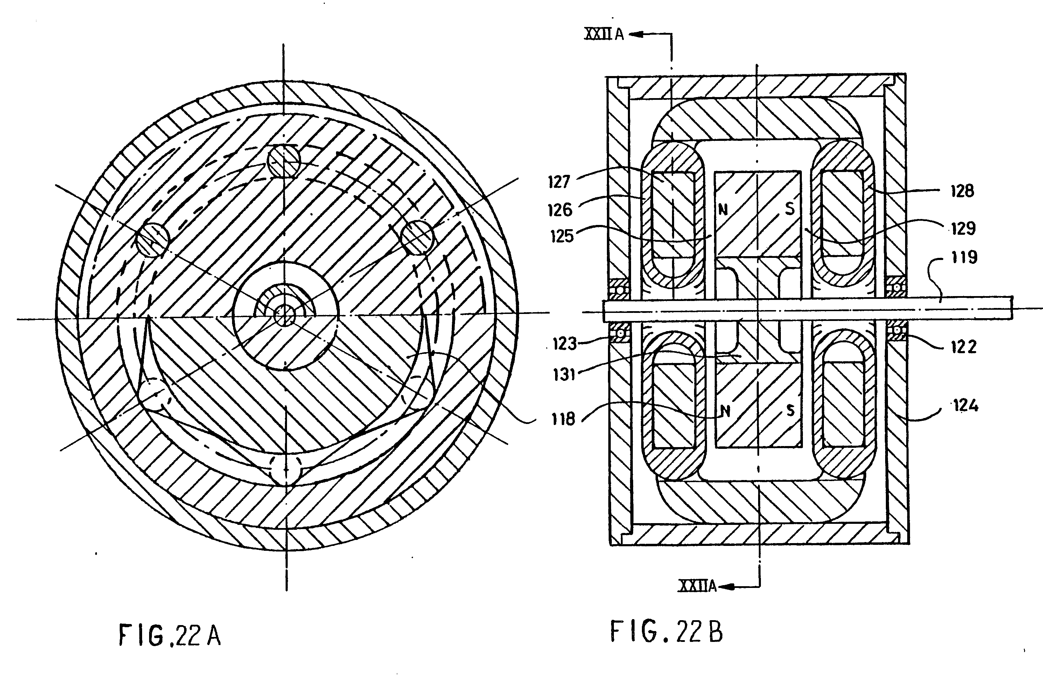

Figures 21 and 22 are embodiments of the invention as collectorless direct current motor, or generator.

The permanent magnet 118 according to figure 21A and 21B is connected to the axle of a rotor 120 by means of a not-magnetic support 121. The rotor 120 is rotatory positioned by means of bearings in the casing 124 of the generator.

The circuit of the magnetic field is as follows: from the north pole of the permanent magnet 118, through the N-pole air-gap 125 between rotor and stator, next through the N-pole coil 126, which is installed insulted on the yoke 127, consisting of ferrite or lamellated soft iron. Through the yoke the magnetic flux reaches the south pole coil 128 and the air gap 129, and finally the south pole of the permanent magnet.

When the rotor is set into motion, the magnetic field in the air gaps 125 and 129 will rotate as well. This induces an electric tension in the copper coils 126 and 128. Both coils can be connected in series or can be used independent of each other.

The apparatus according to figures 22A and 22B is identical in function to the apparatus according to figure 21A and 21B, with the exception of the directions of magnetization of the permanent magnets used.

The permanent magnet 130 according to figures 22A and 22B is connected to the axle 119 of the rotor by means of a not-magnetic support 131. The rotor is positioned rotatory in the casing 124 of the motor by means of bearing 122 and 123. The circuit of the magnetic field is as follows: from the north pole of the permanent magnet, through the N-pole air gap 125 between rotor and stator, next through the N-pole coil 126, which is installed insulated on the yoke 127, consisting of ferrite or lamellated soft iron. Through the yoke the magnetic flux reaches the south pole coil 128 and the south pole air gap 129, and finally the south pole of the permanent magnet 130.

It will be obvious that many variants of the apparatus according to the invention are possible. Important is, however, the fact that the direction of magnetization is the applied permanent magnetic or magnetizable bodies, is at an angle with the normal, in order that a transversal component of the exerted magnetic force exists. It should be noted that a similar result can also be reached, when a construction of closely adjacent magnets of the common type is used, in which the directions of magnetization is mutually parallel or under an angle in respect of one another. Such a construction is considered to be part of the invention.

**Claims**

1. A method for the conversion of stationary magnetic energy into mechanical energy, under the application of two or more, in their relation to one another, movably positioned bodies, which bodies consist wholly or in part of permanent magnetic or magnetizable material, each body in magnetized condition having one or more polar planes, characterized in that, with at least one of the bodies a stationary magnetic field is created, under the influence of which, with respect to at least one other of the bodies in magnetized condition, locally a force of magnetic origin is exerted, of which the vectorial resultant makes an angle unequal to zero degrees with the normal to the polar plane at said location of this other body beforementioned, as a result of which said bodies mutually move in substance along each others polar planes.

2. An apparatus for the conversion of stationary magnetic energy into mechanical energy, comprising two or more in their relation to one another movably positioned bodies, which bodies consist wholly or in part of permanent magnetic or magnetizable material, each body in magnetized condition having one or more polar planes, characterized in that, the bodies are positioned in respect of each other in such a way that, in magnetized condition, each body borders with a polar plane on a polar plane of another body, in which at least one of the bodies provides a stationary magnetic field, while at least one of the other bodies is constructed in such a way, that the vectors that represent a force of magnetic origin exerted by the bodies onto each other make an angle unequal to zero degrees with the normal on the corresponding polar plane, as a result of which the said bodies mutually move in substance along each others polar planes.

3.An apparatus according to claim 2, characterized in that at least one body consists wholly or in part of a permanent magnet.

4.An apparatus according to claim 2, characterized in that at least one body consists wholly or in part of magnetizable material, with at least one coil for the magnetization of at least said one body.

5.An apparatus according to claims 2, 3, or 4, characterized in that at least one other body likewise provides a stationary magnetic field, and consists wholly or in part of a permanent magnet.

6.An apparatus according to claims 2, 3, or 4, characterized in that at least one other body in magnetized condition likewise provides a stationary magnetic field, and consists wholly or in part of magnetizable material, with at least one electric coil for the purpose of magnetizing this at least one other body.

7.An apparatus according to claims 4 or 6, characterized in that at least one electric coil is made of superconductive material.

8.An apparatus according to one or more of the claims 2-7, characterized in that the bodies are constructed in such a way that in magnetized condition the direction of magnetization is at an angle between zero and ninety degrees with the normal to a polar plane of the bodies.

9.An apparatus according to claim 8, characterized in that two or more of the bodies have such a pre-determined direction of magnetization that they mutually make an angle between zero and ninety degrees.

10.An apparatus according to one or more of the claims 2 - 9, characterized in that the apparatus comprises two oblong bodies, positioned parallel and at a distance of each other, each of which bodies provides in magnetized condition a stationary magnetic field, with a direction of magnetization at an angle between zero and ninety degrees with the normal to the facing planes of the bodies, in which the directions of magnetization of the two bodies are mainly parallel to each other, as well as a third body which is positioned between the two other bodies in a parallel direction and adjustable in a direction perpendicular to the two other bodies, which third body provides in magnetized condition a stationary magnetic field with a corresponding direction of magnetization to the two oblong, parallel bodies, yet with opposed polarity.

11. An apparatus according to one or more of the claims 2-9, characterized in that the apparatus comprises two annular bodies, which provide in magnetized condition a stationary magnetic field, which annular bodies are mainly positioned parallel and co-axial with respect to each other, in which the direction of magnetization of both annular bodies is mainly parallel, yet opposed, in such a way that the direction of magnetization of each annular body is at an angle between zero and ninety degrees to a plane perpendicular to the axis of the body, and to a plane through the axis of this annular body, in which one of the annular bodies is fixed to a rotatory axle and the other annular body can be adjusted along the centre axis.

12.An apparatus according to one or more of the claims 2 - 9, characterized in that the apparatus comprises two annular bodies positioned parallel and at a distance of each other, which bodies in magnetized condition provide a stationary magnetic field, which annular bodies are mainly positioned parallel and co-axial with respect to each other, in which the directions of magnetization of both annular bodies are parallel, yet opposed, in which the direction of magnetization of each annular body is in a plane perpendicular to the axis of the body, and is at an angle between zero and ninety degrees with the radial of this annular body, in which the apparatus furthermore comprises a round disk, positioned parallel and co-axial with respect of the annular bodies, which is fixed to a rotatory axle, and which in magnetized condition provides a stationary magnetic field of which the direction of magnetization is in a plane perpendicular to the axis of the round disk, and at the ring surface is at an angle between zero and ninety degrees to its radial, in which the diameter of the round disk is smaller than the inside diameter of each of the annular bodies.

13.An apparatus according to claims 2, 3, 4 or 7, characterized in that the apparatus comprises a first and a second body positioned at a distance of each other, of which the first body is provided with at least two polar shoes at the side facing the second body, and of which the second body is provided with at least one polar shoe at the side facing the first body, which bodies provide in magnetized condition a stationary magnetic field, in which the consecutive polar shoes of the first body have an opposed direction of magnetization, as well as a rotatory positioned diskshaped third body, which consists wholly or in part of magnetizable material. of which the pre-determined direction of magnetization is in line with the axis.

14.An apparatus according to claim 2, 3, 4, or 7, characterized in that the apparatus comprises at least two oblong bodies positioned at a distance of each other and in their relation to one another adjustable, which bodies are provided with polar shoes at the side facing each other, in such a way that in magnetized condition the bodies provide a stationary magnetic field, in which the consecutive polar shoes of the one body have an opposed magnetic polarity, as well as a band-shaped third body, positioned between the polar shoes of the bodies and which third body can move in longitudinal direction, which third body consists wholly or in part of magnetizable material, of which the predetermined direction of magnetization is mainly perpendicular to the direction of movement.

15. An apparatus according to claims 2, 3, 4 or 7, characterized in that the apparatus comprises a first body, surrounded by a second annular body, which bodes are adjustable in their relation to one another, and which bodies are provided with polar shoes at the sides facing each other, in such a way that in magnetized condition the bodies provide a stationary magnetic field in which the consecutive polar shoes of the one body have an opposed magnetic polarity, as well as a rotary, annular third body which is positioned co-axial with respect to the second annular body, which third body consists wholly or in part of magnetizable material, of which the pre-determined direction of magnetization is mainly in a radial direction.

16. An apparatus according to claims 2, 3, 4 or 7, characterized in that the apparatus comprises a first and second body positioned at a distance of each other, which bodies are provided with polar shoes at the sides facing each other, and a third body between the beforementioned two other bodies, which can be adjusted and which is likewise provided with polar shoes, which bodies provide in magnetized condition a stationary magnetic field, as well as a fourth rotatory annular body enclosing the third body, which fourth body consists wholly or in part of magnetizable material, of which the pre-determined direction of magnetization is in a radial direction.

17. An apparatus according to claim 16, characterized in that the rotatory body consists of a round disk made of not magnetic support, at which circumference several in respect to one another magnetically seperated sections of magnetizable material are preferably arranged in such a way that the direction of magnetization is radial.

18. An apparatus according to claim 2, 3, 4, or 7, characterized in that the apparatus comprises two annular bodies, which bodies in magnetized condition provide a magnetic field, which annular bodies are positioned mainly parallel and co-axial with regard to one another, and a rotatory third body positioned between these two annular bodies, which third body provides in magnetized condition a stationary magnetic field, of which the direction of magnetization is mainly in a radial direction.

19. An apparatus according to claims 2, 3, 4, or 7, characterized in that the apparatus comprises two annular bodies positioned at a distance over each other, which are magnetically connected to each other, which bodies provide in magnetized condition a stationary magnetic field, in which a rotatory third annular body is positioned between the two annular bodies, which in magnetized condition provides a stationary magnetic field, of which the direction of magnetization is mainly perpendicular to the plane of both former annular bodies.

# FIG. 1A

# FIG. 1B

# FIG. 2A

# FIG. 2B

FIG. 3

FIG. 4

FIG. 5

FIG. 6

FIG. 7

FIG. 8A

FIG. 8B

FIG. 9A

FIG. 9B

FIG. 10A

FIG. 10B

FIG. 11A

FIG. 11B

FIG. 12 A

FIG. 12 B

FIG. 12 C

FIG. 12 D

FIG. 12 E

FIG.13 B

FIG.13 A

FIG.13 C

FIG.14A

XIV-B

90°
76
75
45°

N 80
79 S

N

73
72

S

S

N

71

XIV-B

FIG.14B

XIV-A

71

72

77

73
74

78

XIV-A

EP 0 298 566 A2

FIG. 15A

90  94  93  87
S N | S N
81  83
92
S N' | S N
89  88

91

XV B

XV A
91
83
84
81
82
85
86
XV A

EP 0 298 566 A2

FIG. 16 A

FIG. 16 B

FIG. 16 C

FIG. 17A

FIG. 17B

FIG.18A

FIG.18B

FIG.18C

FIG. 19 A

FIG. 19 B

EP 0 298 566 A2

FIG. 20 A

FIG. 20 B

EP 0 298 566 A2

FIG. 21B

FIG. 21A

FIG. 22 A

FIG. 22 B

EP 0 298 566 A2